# FASCICULE DE BREVET EUROPEEN

(11) **EP 3 138 165 B1**
(45) Date de publication et mention de la délivrance du brevet: **27.11.2019**
(21) Numéro de dépôt: 15723264.6
(22) Date de dépôt: 23.04.2015
(51) Int. Cl.: H02G 3/06, H02G 3/08, H02G 3/12

(54) **EMBOUT D'ENTRÉE DE CONDUCTEURS ÉLECTRIQUES DANS UNE BOÎTE ÉLECTRIQUE**
EINGANGSVERSCHRAUBUNG FÜR ELEKTRISCHE LEITER IN EINEM ELEKTRISCHEN SCHALTKASTEN
INLET FITTING FOR ELECTRICAL CONDUCTORS IN AN ELECTRICAL BOX

(30) Priorité: 28.04.2014 FR 1453829
(43) Date de publication de la demande: 08.03.2017
(73) Titulaire: Legrand France, 87000 Limoges (FR); Legrand SNC, 87000 Limoges (FR)
(72) Inventeur: MAZIERE, Laurent, 87220 Feytiat (FR); CAILLE,Jean-Loup, 87510 Peyrilhac (FR); LONGEVILLE, Jérôme, 87350 Panazol (FR); CHAUMENY, Jean-Luc, 87590 Saint Just le Martel (FR)
(74) Mandataire: Jacobacci Coralis Harle
(86) Numéro de dépôt international: PCT/FR2015/051104
(87) Numéro de publication internationale: WO 2015/166171

(56) Documents cités:
- EP-A- 1 531 532
- EP-A1- 1 467 454
- EP-A1- 2 363 933
- EP-A1- 2 482 405
- EP-A1- 2 670 010
- EP-A2- 2 677 615
- DE-U1- 20 308 570
- DE-U1-202007 012 109
- NL-C- 1 019 822

## Description

### DOMAINE TECHNIQUE AUQUEL SE RAPPORTE L'INVENTION

La présente invention concerne de manière générale les appareillages électriques à encastrer dans des parois.

Elle concerne plus particulièrement un connecteur tel que défini dans le préambule de la revendication 1.

L'invention s'applique avantageusement aux boîtes électriques d'encastrement pour cloisons creuses destinées à recevoir divers mécanismes d'appareillage électrique tels qu'un mécanisme d'interrupteur, de va-et-vient, de variateur électrique, de prise de courant, de prise réseau (RJ45), de prise de téléphone (RJ11), de voyant, ou encore de détecteur (de fumée, d'inondation, de température, de mouvement ou de lumière).

### ARRIERE-PLAN TECHNOLOGIQUE

Généralement, les boîtes électriques comportent extérieurement des moyens de fixation à une paroi, et intérieurement des moyens d'assujettissement d'un support dans lequel est monté un quelconque mécanisme d'appareillage.

Pour la desserte électrique de ces mécanismes d'appareillage, les boîtes électriques comportent en partie arrière des opercules défonçables qui permettent d'ouvrir localement leur paroi pour introduire dans leur volume intérieur des gaines de cheminement de conducteurs électriques.

Les boîtes électriques présentent des tailles standards. Ainsi, couramment, une boîte électrique circulaire à encastrer présente un diamètre de 68 millimètres et une profondeur usuelle de 40 millimètres.

Le volume intérieur d'une telle boîte électrique est alors réduit et il n'est pas aisé d'y loger non seulement un mécanisme d'appareillage, mais également l'extrémité de la gaine de cheminement et les extrémités des conducteurs électriques.

Il s'avère alors nécessaire, après avoir repoussé la boîte dans la paroi, de découper la gaine à hauteur du fond de la paroi et de découper les conducteurs électriques à la plus faible longueur possible, de manière à libérer suffisamment d'espace dans la boîte pour y loger le mécanisme d'appareillage. Cette opération s'avère particulièrement fastidieuse.

Le faible volume intérieur de la boîte restreint par ailleurs les possibilités d'évolution des mécanismes d'appareillage qui, du fait de leurs tailles limitées, ne peuvent en effet pas intégrer toutes les fonctions souhaitées.

On connaît alors du document EP2549603 un embout tel que défini en introduction, grâce auquel il n'est pas nécessaire d'engager la gaine de cheminement à l'intérieur de la boîte. Cet embout se connecte à cet effet, d'un côté, à l'extrémité de la gaine de cheminement, et, de l'autre, au bord d'une ouverture pratiquée en correspondance dans la boîte.

L'inconvénient majeur de cet embout est qu'il ne permet pas de repiquer facilement un autre mécanisme d'appareillage (logé dans une autre boîte électrique) en parallèle de celui considéré. Cet embout ne permet pas davantage de faire partir des fils électriques dans une autre gaine (par exemple un fil électrique de phase coupée dans le cas d'un interrupteur, un fil électrique de navette dans le cas d'un va-et-vient, ou encore un fil de téléphone ou de câble USB...).

En effet, pour connecter un autre mécanisme d'appareillage en parallèle de celui considéré ou pour faire partir un fil électrique quelconque dans une autre gaine, il est nécessaire de dégager une seconde ouverture dans la boîte considérée et d'utiliser un second embout à connecter au bord de cette seconde ouverture.

L'installation d'un tel second embout est répétitive pour l'installateur, et son utilisation est onéreuse.

En outre, puisque les ouvertures pratiquées dans la boîte considérée pour accueillir ces deux embouts sont éloignées l'une de l'autre, les deux gaines de cheminement connectées à ces embouts s'éloignent de la boîte dans des directions opposées.

Il s'avère alors difficile de refouler la boîte dans la paroi puisque les gaines de cheminement et les embouts vont alors interférer avec ladite paroi.

Ce refoulement est d'autant plus difficile que l'embout décrit impose à chaque gaine une direction fixe.

On connaît par ailleurs du document DE20308570 un embout d'entrée de câbles électriques dans une boîte électrique.

Cet embout comporte une embase à rapporter sur la boîte électrique, dont la paroi supérieure présente une forme de toit avec deux pans inclinés. Cet embout comporte également deux conduits qui sont respectivement fixés sur les deux pans inclinés de l'embase, au moyen de brides vissées sur l'embase.

Dans ce document le réglage de l'inclinaison des deux conduits l'un par rapport à l'autre est difficile à mettre en œuvre, puisqu'il nécessite de manœuvrer ces vis.

On connaît enfin du document DE202007012109 une entretoise à engager au travers d'une ouverture pratiquée dans un plafond, de façon à délimiter un espace d'accueil pour un spot de lumière. Dans ce document, l'entretoise est équipée d'un picot permettant d'y fixer des dominos de connexion électrique.

### OBJET DE L'INVENTION

Afin de remédier aux inconvénients précités de l'état de la technique, la présente invention propose un connecteur équipé d'un embout permettant une connexion de deux gaines de cheminement, en position juxtaposée.

Plus particulièrement, on propose selon l'invention un connecteur tel que défini dans la revendication 1.

Ainsi, grâce à l'invention, il est possible d'engager au moins deux gaines de cheminement dans les conduits de l'embout.

Il suffit donc de connecter un seul embout à la boîte électrique pour y connecter au moins deux gaines de cheminement, ce qui facilite le travail de l'installateur.

Par ailleurs, puisque ces gaines de cheminement sont connectées du même côté de la boîte, il est plus facile de refouler la boîte dans la paroi. En effet, pour cela, il suffit de commencer par repousser complètement les gaines, l'embout, et un côté de la boîte dans la paroi, puis de basculer la boîte dans la paroi.

Enfin, puisque les conduits de l'embout sont orientables l'un par rapport à l'autre, ils n'empêchent pas les gaines de partir à l'intérieur de la paroi dans des directions différentes.

D'autres caractéristiques avantageuses et non limitatives du connecteur sont définies dans les revendications 2 à 17.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective d'un embout selon l'invention ;
- la figure 2 est une vue en coupe selon le plan A-A de la figure 1 ;
- la figure 3 est une vue schématique en perspective de l'embout de la figure 1, vu sous un autre angle ;
- les figures 4 et 5 sont des vues schématiques de l'embout de la figure 1, représenté dans deux états déformés distincts ;
- la figure 6 est une vue schématique en perspective d'un premier mode de réalisation d'une boîte électrique équipée de l'embout de la figure 1 ;
- la figure 7 est une vue en coupe selon le plan B-B de la figure 6 ;
- la figure 8 est une vue schématique en perspective de l'étrier et de l'embout de la boîte électrique de la figure 6, engagés au travers d'une ouverture pratiquée dans une paroi murale ;
- la figure 9 est une vue schématique en perspective éclatée d'un second mode de réalisation d'une boîte électrique équipée de l'embout de la figure 1 ;
- la figure 10 est une vue en coupe de la boîte électrique représentée sur la figure 9 ;
- la figure 11 est une vue schématique en perspective d'une variante de réalisation de l'embout de la figure 1 ;
- la figure 12 est une vue schématique en perspective d'une partie d'un troisième mode de réalisation de la boîte électrique ;
- les figures 13 et 14 sont des vues schématiques en perspective d'un second mode de réalisation de l'embout, représenté sous deux angles différents, qui est adapté à se fixer à la partie de boîte électrique de la figure 12 ;
- les figures 15 et 16 sont des vues schématiques en perspective éclatée de l'embout des figures 13 et 14 ;
- les figures 17 et 18 sont des vues schématiques en perspective d'un troisième mode de réalisation de l'embout, représenté sous deux angles différents, qui est adapté à se fixer à la partie de boîte électrique de la figure 12 ;
- les figures 19 et 20 sont des vues schématiques en perspective d'un quatrième mode de réalisation de l'embout, représenté sous deux angles différents, qui est adapté à se fixer à la partie de boîte électrique de la figure 12 ;
- les figures 21 et 22 sont des vues schématiques en perspective d'un cinquième mode de réalisation de l'embout, représenté sous deux angles différents, qui est adapté à se fixer à la partie de boîte électrique de la figure 12 ; et
- la figure 23 est une vue en coupe selon le plan C-C de la figure 22.

En préliminaire on notera que les éléments identiques ou similaires des différentes variantes de réalisation de l'invention représentés sur les différentes figures seront, dans la mesure du possible, référencés par les mêmes signes de référence et ne seront pas décrits à chaque fois.

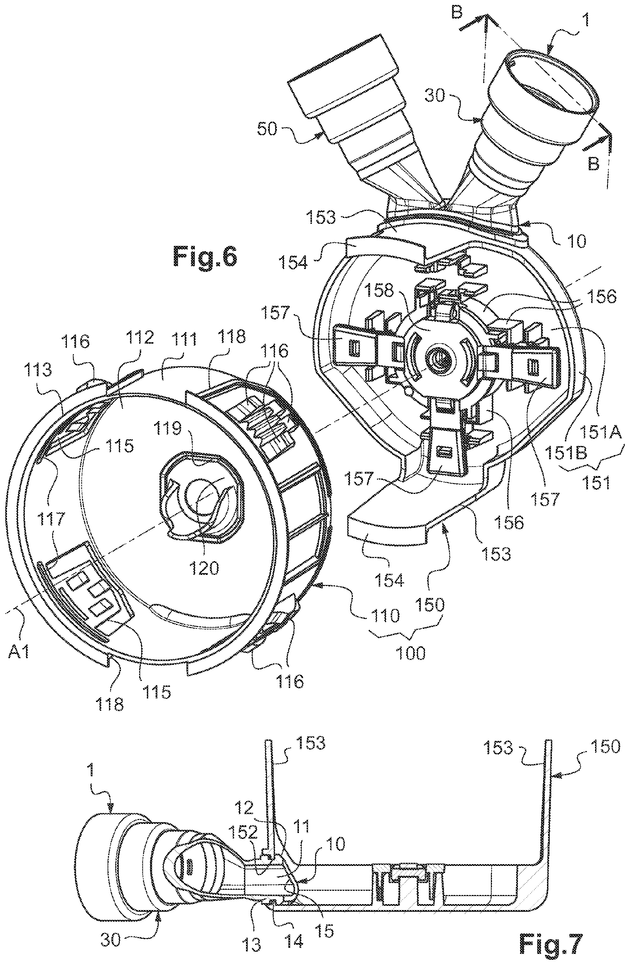

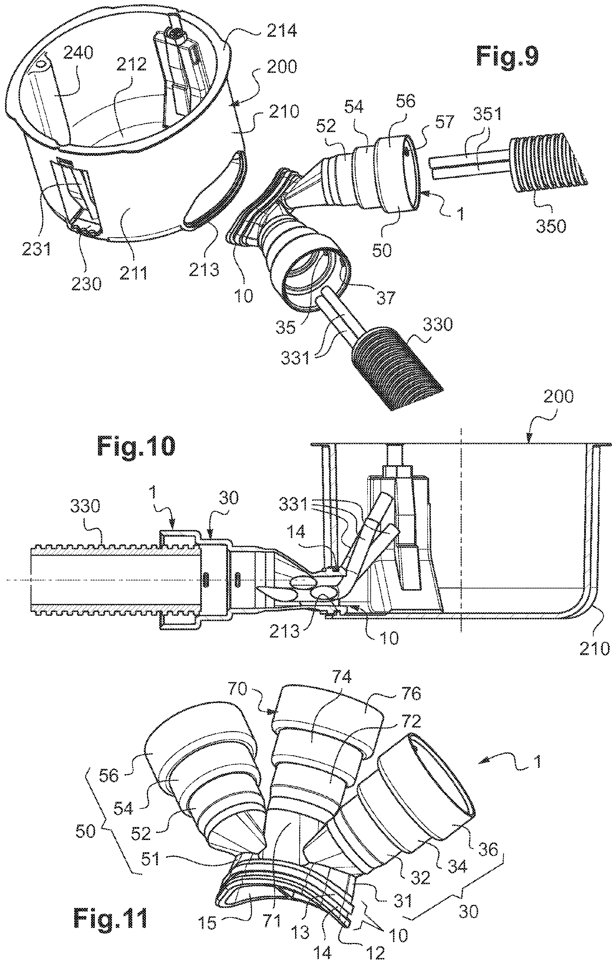

Sur les figures 6 et 9, on a représenté deux modes de réalisation d'une boîte électrique 100 ; 200 à encastrer dans une cavité pratiquée dans une paroi.

Cette paroi est ici formée par une cloison creuse.

On rappelle à ce sujet que, de manière connue, une telle cloison creuse est généralement composée d'un treillage métallique (formé de montants verticaux et de rails horizontaux non représentés) et de panneaux de plâtre rapportés sur l'une au moins des deux faces du treillage métallique.

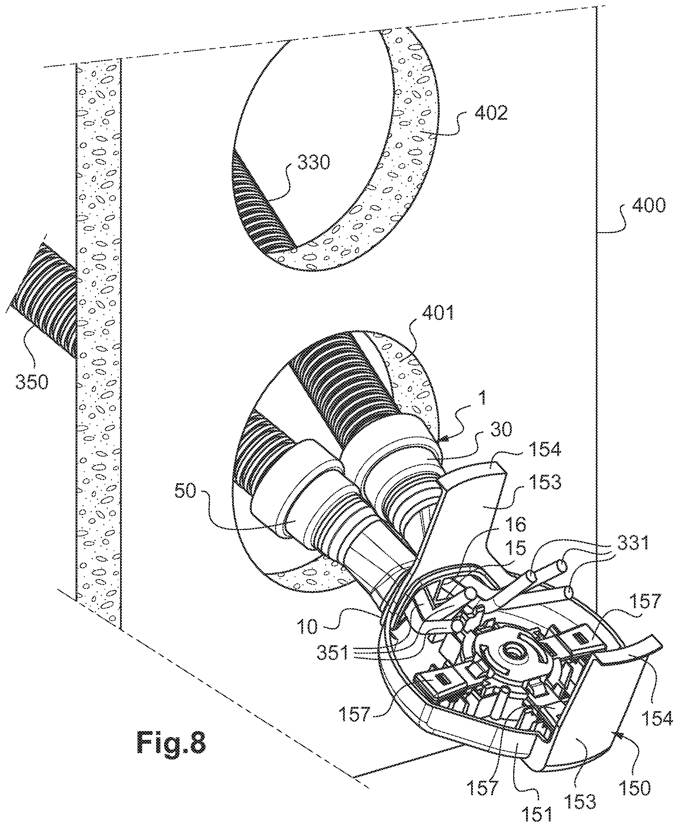

Comme le montre la figure 8, la cavité pratiquée dans cette cloison creuse pour accueillir la boîte électrique 100 ; 200 est alors simplement formée par une ouverture circulaire 401 réalisée à la scie cloche dans l'un des panneaux de plâtre 400.

Tel que cela apparaît sur la figure 8, il est ici prévu deux ouvertures circulaires 401 situées l'une au-dessus de l'autre pour accueillir deux boîtes électriques distinctes.

Dans la description, les termes « avant » et « arrière » seront utilisés par rapport à la direction du regard de l'installateur de la boîte électrique 100 ; 200 dans le panneau de plâtre 400. Ainsi, les termes avant et arrière désigneront respectivement le lieu tourné vers l'extérieur de la cloison creuse et le lieu tourné vers l'intérieur de cette cloison creuse.

En variante, la paroi pourrait être formée, non pas par une cloison creuse du type précité, mais plutôt par une cloison constituée de deux parois parallèles (par exemple l'une en béton et l'autre en briques) espacées et isolées l'une de l'autre par une couche d'isolant.

Comme cela sera détaillé dans la suite de cet exposé, dans le premier mode de réalisation représenté sur la figure 6, la boîte électrique 100 est conçue pour accueillir un module d'appareillage, tandis que dans le second mode de réalisation représenté sur la figure 9, la boîte électrique 200 est conçue pour accueillir un mécanisme d'appareillage monté dans un support d'appareillage.

Dans ces deux modes de réalisation, il est alors nécessaire de pouvoir alimenter en courant le module d'appareillage ou le mécanisme d'appareillage logé dans la boîte électrique 100 ; 200.

Pour cela, comme le montrent bien les figures 8 et 9, au moins une gaine de cheminement 330, 350 est tirée entre les panneaux de plâtre 400 de la cloison creuse.

Tel que cela apparaît sur les figures, il est prévu une première gaine de cheminement 330 dans laquelle courent trois conducteurs électriques (en l'espèce des fils électriques 331 de phase, de neutre, et de terre) qui sont issus du réseau électrique local et qui permettent d'alimenter en courant le module d'appareillage ou le mécanisme d'appareillage.

Il est également prévu une seconde gaine de cheminement 350 dans laquelle courent trois autres fils électriques 351 de phase, de neutre, et de terre qui permettent de connecter un autre module d'appareillage ou un autre mécanisme d'appareillage en parallèle de celui considéré (on parle alors de « repiquage »).

Il s'agit ici de gaines de cheminement 330, 350 plastiques, annelées et souples, constituées d'une succession d'anneaux et de gorges.

Dans le premier mode de réalisation représenté sur les figures 6 à 8, la boîte électrique 100 comporte un corps 110 et un connecteur 150 (ci-après appelé « étrier ») qui est prévu pour être rapporté à l'arrière du corps 110 et pour faciliter la connexion des fils électriques 331, 351 au module d'appareillage.

Dans le second mode de réalisation représenté sur les figures 9 et 10, la boîte électrique 200 comporte simplement un corps 210.

Ces deux modes de réalisation de la boîte électrique 100 ; 200 seront décrits en détail dans la suite de cet exposé.

A ce stade de l'exposé, on notera seulement que dans ces deux modes de réalisation, la boîte électrique 100 ; 200 présente une ouverture d'entrée 152 ; 213 permettant aux fils électriques 331, 351 d'entrer à l'intérieur de la boîte électrique 100 ; 200 pour la desserte en courant du mécanisme ou du module d'appareillage. Dans le premier mode de réalisation, cette ouverture d'entrée 152 est située dans la paroi latérale de l'étrier 150 (voir figure 7), et dans le second mode de réalisation, cette ouverture d'entrée 213 est située dans la paroi latérale du corps 210 (voir figure 9).

Il est alors prévu, et c'est l'objet de la présente invention, un embout 1 permettant de connecter les deux gaines de cheminement 330, 350 à l'ouverture d'entrée 152 ; 213 prévue dans la boîte électrique 100 ; 200.

Cet embout 1 est ici identique dans les deux modes de réalisation de la boîte électrique 100 ; 200 représentée sur les figures 6 à 10.

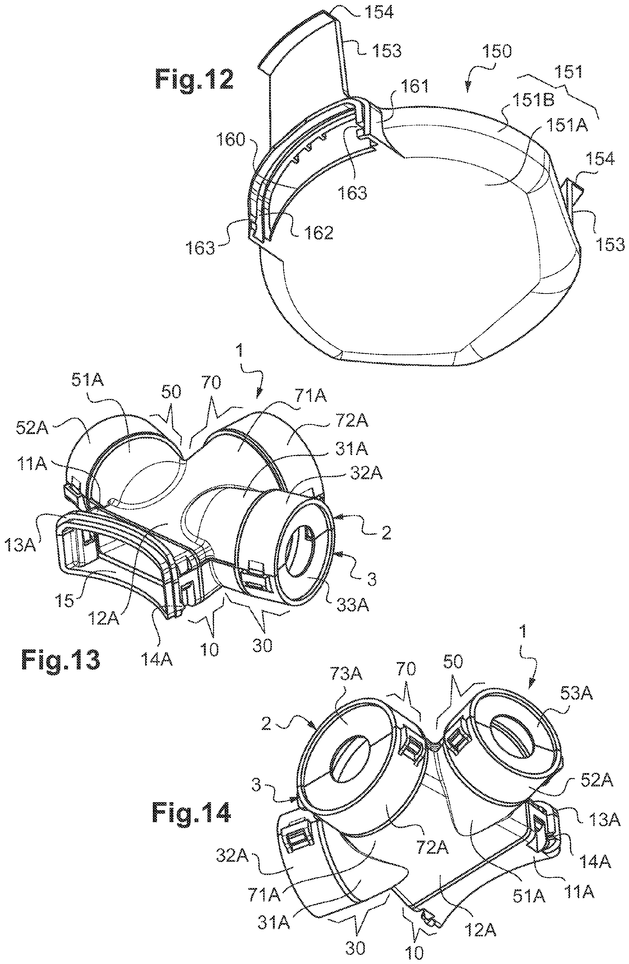

Il présente en revanche une forme différente dans la variante de réalisation représentée sur la figure 11, ainsi que dans les modes de réalisation respectivement représentés sur les figures 13 à 16 ; 17 et 18 ; 19 et 20 ; 21 à 23.

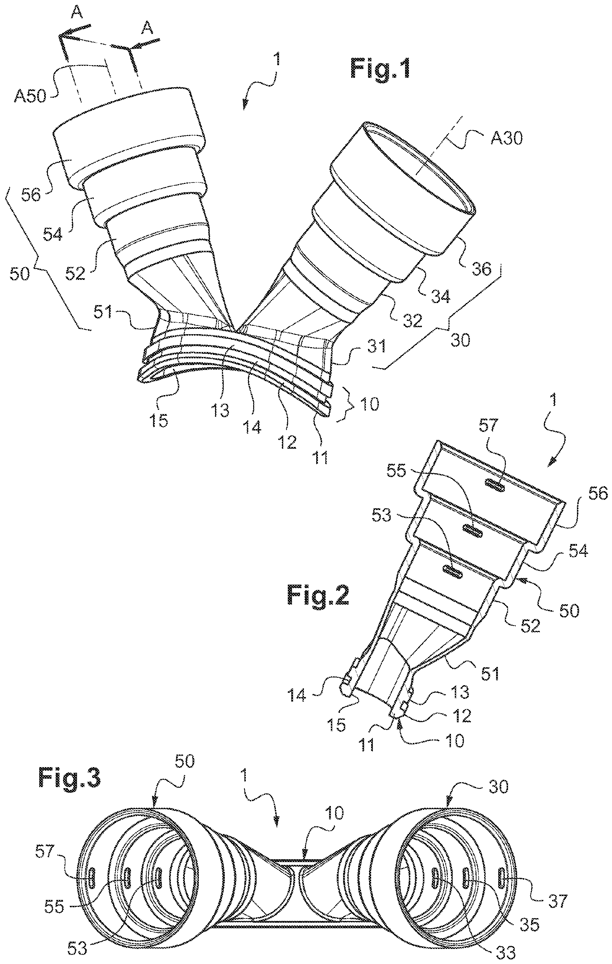

Comme le montrent les figures 1, 3, 13, 17, 19 et 21, selon une caractéristique particulièrement avantageuse de l'invention, cet embout 1 comporte :
- une embase de fixation 10 pour sa fixation au bord de l'ouverture d'entrée 152 ; 213 prévue dans la boîte électrique 100 ; 200, qui délimite une ouverture de passage 15 de fils électriques 331, 351,
- un premier conduit 30 qui s'étend à partir de l'embase de fixation 10 et qui comprend des moyens de connexion 33, 35, 37 ; 33A ; 80 ; 90 à une gaine de cheminement 330 de fils électriques 331, et
- un second conduit 50 qui s'étend à partir de l'embase de fixation 10, qui comprend des moyens de connexion 53, 55, 57 ; 53A ; 81 ; 91 à une autre gaine de cheminement 350 de fils électriques 351, et dont une partie d'extrémité libre 52, 54, 56 ; 52A présente une orientation ajustable par rapport à ladite embase de fixation 10.

On pourrait prévoir que le premier conduit ait une orientation fixe par rapport à ladite embase de fixation.

Toutefois, ici, les deux conduits 30, 50 sont identiques, si bien qu'ils présentent tous deux une orientation ajustable par rapport à ladite embase de fixation 10. Ainsi sera-t-il possible d'orienter les deux gaines de cheminement 330, 350 dans deux directions souhaitées distinctes, ce qui facilitera l'installation de la boîte électrique 100 ; 200.

Comme le montre plus particulièrement la figure 1, les deux conduits 30, 50 présentent chacun une partie de liaison 31, 51 qui s'étend à partir de l'embase de fixation 10, dans le prolongement de l'ouverture de passage 15, et une partie d'extrémité libre 32, 34, 36, 52, 54, 56 qui est équipée des moyens de connexion 33, 35, 37, 53, 55, 57 à l'une des gaines de cheminement 330, 350.

Ici, les parties de liaison 31, 51 des conduits sont plus flexibles que les partie d'extrémité libre 32, 34, 36, 52, 54, 56, si bien qu'elles forment une sorte de charnière qui permet d'orienter manuellement les parties d'extrémité libre 32, 34, 36, 52, 54, 56 des conduits 30, 50 dans les directions souhaitées.

En pratique, dans les modes de réalisation représentés sur les figures 1 à 12, l'embout 1 est réalisé d'une seule pièce dans une matière souple, c'est-à-dire dans une matière qui permet de déformer manuellement les parties de liaison 31, 51 des conduits 30, 50. Préférentiellement, les parties de liaison 31, 51 sont adaptées à fléchir d'un angle de débattement au moins égal à 30 degrés.

La matière ici utilisée pour mouler l'embout 1 est du SEBS (dont la formule chimique est : «polystyrène-b-poly(éthylène-butylène)-b-polystyrène»). En variante, il pourrait s'agir d'un autre matériau, par exemple du polypropylène, du silicone, de l'EPDM (« éthylène-propylène-diène monomère »), ou encore du caoutchouc.

Comme le montrent les figures 1 et 2, l'embase de fixation 10 comporte une paroi tubulaire 11 de section oblongue, si bien que l'ouverture de passage 15 qu'elle délimite présente un bord également de forme oblongue.

Comme le montre la figure 8, une membrane 16 sépare ici en deux parties égales l'ouverture de passage 15.

Comme le montrent les figures 1 et 2, les conduits 30, 50 débouchent alors respectivement dans ces deux parties de l'ouverture de passage 15.

De cette manière, les fils électriques 331, 351 traversant ces deux conduits 30, 50 entrent dans la boîte électrique 100 ; 200 en position juxtaposée, de sorte qu'ils ne se gênent pas et ne se confondent pas.

L'ouverture d'entrée 152 ; 213 prévue dans la boîte électrique 100 ; 200 est située dans une paroi latérale de forme cylindrique (voir figures 7 et 9).

L'embase de fixation 10 est alors ici incurvée de manière à pouvoir s'étendre dans le prolongement de cette paroi latérale. Ainsi, le bord de l'ouverture de passage 15 délimitée par l'embase de fixation 10 s'étend non pas dans un plan, mais suivant une surface incurvée.

Comme le montrent les figures 1 et 2, l'embase de fixation 10 comporte des moyens de fixation 12, 13 adaptés à s'accrocher à la boîte électrique 100 ; 200.

Ici, ces moyens de fixation 12, 13 sont des moyens dits « à coopération de formes ».

Ils comportent deux nervures périphériques 12, 13 en saillie de la face extérieure de la paroi tubulaire 11.

Une première nervure périphérique 12 longe le bord de l'ouverture de passage 15, tandis que la seconde nervure périphérique 13 s'étend à distance constante de la première. Ainsi, ces deux nervures périphériques 12, 13 délimitent entre elles une gorge périphérique 14.

Comme cela sera bien décrit dans la suite de cet exposé, cette gorge périphérique 14 est prévue pour être engagée sur le bord de l'ouverture d'entrée 152 ; 213 prévue dans la boîte électrique 100 ; 200 (voir figures 7 et 10).

Selon une variante de réalisation de l'invention non représentée sur les figures, on aurait pu prévoir que l'embase de fixation de l'embout soit réalisée dans une matière rigide, et qu'elle soit équipée de moyens d'encliquetage adaptés à se clipser sur le bord de l'ouverture d'entrée correspondante de la boite électrique. Cette matière pourrait par exemple être de l'ABS (acronyme de « acrylonitrile butadiène styrène »).

Comme le montrent les figures 1 à 3, les deux conduits 30, 50 présentent chacun une paroi latérale tubulaire, qui délimite un passage pour les fils électriques 331, 351.

Comme le montre bien la figure 2, les parties de liaison 31, 51 des deux conduits 30, 50 présentent des formes globalement coniques, évasées vers l'extérieur.

La paroi latérale de chaque conduit 30, 50 présente, au niveau de la partie de liaison 31, 51, une épaisseur réduite. Ainsi, les parties de liaison 31, 51 forment des sortes de charnières permettant aux parties d'extrémité libre 32, 34, 36, 52, 54, 56 de pivoter par rapport à l'embase de fixation 10.

La partie d'extrémité libre 32, 34, 36, 52, 54, 56 de chaque conduit 30, 50 est ici formée d'une succession de tubes 32, 34, 36, 52, 54, 56 de diamètres différents, qui sont cylindriques de révolution autour d'un même axe A30, A50.

Ici, la partie d'extrémité libre 32, 34, 36, 52, 54, 56 de chaque conduit 30, 50 est formée d'une succession de trois tubes 32, 34, 36, 52, 54, 56.

Ainsi, un premier tube 32, 52 prolonge la partie de liaison 31, 51. Ce premier tube 32, 52 se prolonge par un second tube 34, 54 présentant une longueur identique à celle du premier tube, mais un diamètre strictement supérieur à celui du premier tube. Ce second tube 34, 54 se prolonge par un troisième tube 36, 56 présentant une longueur identique à celle du premier tube, mais un diamètre strictement supérieur à celui du second tube.

Ainsi, les conduits 30, 50 peuvent accueillir trois sortes de gaines de cheminement de diamètres différents.

Chaque tube 32, 34, 36, 52, 54, 56 est équipé de ses propres moyens de fixation 33, 35, 37, 53, 55, 57 d'une gaine de cheminement.

Comme le montre plus particulièrement la figure 3, ces moyens de fixation se présentent ici sous la forme de deux dents 33, 35, 37, 53, 55, 57 diamétralement opposées, qui font saillie à l'intérieur de chaque tube 32, 34, 36, 52, 54, 56 et qui sont adaptées à s'engager dans l'une des gorges de la gaine de cheminement 330, 350 correspondante.

En variante, il pourrait s'agir d'une nervure s'étendant sur tout le pourtour de la face intérieure de chaque tube.

Encore en variante, on pourrait prévoir que la seule élasticité du matériau utilisé (le SEBS) permette aux tubes de retenir les gaines de cheminement, sans qu'il ne soit nécessaire de prévoir d'autres moyens de fixation.

A l'état non déformé, les deux conduits 30, 50 s'étendent en longueur selon des axes A30, A50 qui sont inclinés l'un par rapport à l'autre et qui s'étendent dans un plan orthogonal au plan moyen de l'ouverture de passage 15. De cette manière, une fois que l'embout 1 sera fixé à la boîte électrique 100 ; 200, ces deux axes A30, A50 s'étendront dans un plan parallèle au fond de la boîte électrique 100 ; 200, c'est-à-dire dans un plan parallèle au panneau de plâtre 400.

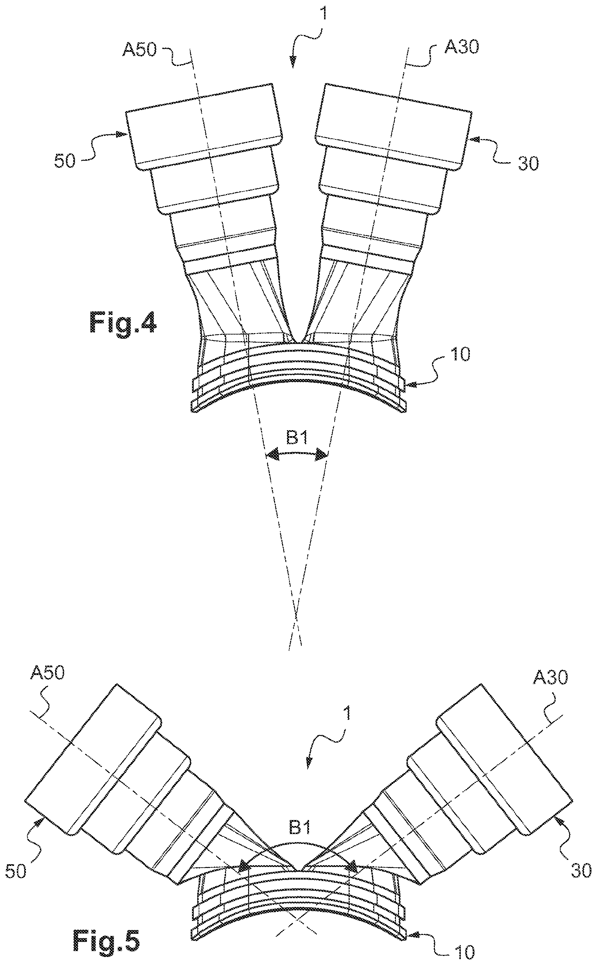

Comme le montrent les figures 4 et 5, les conduits 30, 50 sont tout d'abord prévus pour fléchir dans ce plan. Ici, ils peuvent donc être inclinés l'un vers l'autre (avec un angle d'inclinaison B1 entre les axes A30, A50 de l'ordre de 10 degrés), ou l'un à distance de l'autre (avec un angle d'inclinaison B1 de l'ordre de 120 degrés).

Ici, les conduits 30, 50 pourront également être inclinés vers l'avant ou vers l'arrière.

Sur les figures 6 à 8, on a représenté le premier mode de réalisation de cette boîte électrique 100.

Comme cela a été exposé précédemment, dans ce mode de réalisation, la boîte électrique comporte un étrier 150 et un corps 110.

Comme le montre la figure 6, le corps 110 comporte une paroi latérale 111 tubulaire de révolution autour d'un axe principal A1, qui est fermée à l'arrière par un fond 112 et qui est ouverte vers l'avant. Le corps 110 délimite ainsi un logement intérieur d'accueil d'un module d'appareillage.

Un tel module d'appareillage se présente sous la forme d'un boîtier (de taille identique à celle du logement intérieur délimité par le corps 110) qui loge intérieurement un mécanisme électrique de manière à pouvoir assurer une fonction électrique quelconque, par exemple d'interrupteur ou de prise de courant. Un tel module d'appareillage est conçu pour se fixer directement au corps, sans l'aide d'un quelconque support d'appareillage.

Le corps 110 comporte alors des moyens d'assujettissement de ce module d'appareillage, qui se présentent ici sous la forme de quatre fenêtres 117 régulièrement réparties sur le pourtour de la paroi latérale 111, dans lesquelles peuvent s'accrocher des moyens d'encliquetage prévus sur le module d'appareillage.

Pour sa fixation dans l'ouverture circulaire 401 pratiquée dans le panneau de plâtre 400, le corps 110 comporte un trottoir extérieur 113 qui longe extérieurement le bord de l'ouverture avant de sa paroi latérale 111 et qui est adapté à prendre appui contre la face avant du panneau de plâtre 400, autour de l'ouverture circulaire 401. Ainsi ce trottoir extérieur 113 permet-il de bloquer le corps 110 vers l'arrière.

Pour son blocage vers l'avant, le corps 110 comporte quatre volets 115 rectangulaires découpés dans sa paroi latérale 111 de telle manière qu'ils se rattachent à celle-ci uniquement par leurs bords avant, ce dernier formant alors une sorte de charnière.

Une couche de matière souple (en SEBS) est surmoulée sur une partie de la face extérieure de la paroi latérale 111, notamment sur chaque volet 115. Cette couche de matière souple est conformée de telle manière que chaque volet 115 porte sur sa face extérieure des nervures parallèles souples 116.

Chaque volet 115 est ainsi libre de s'escamoter vers l'intérieur de la boîte électrique 100 lors de l'engagement du corps 110 au travers de l'ouverture circulaire 401 prévue dans le panneau de plâtre 400, puis pour revenir vers sa position initiale de manière que ses nervures parallèles souples 116 puissent s'accrocher à la face arrière du panneau de plâtre 400. Les volets 115 sont ensuite bloqués dans cette position par le module d'appareillage lui-même, qui est conçu pour remplir complètement l'intérieur du corps 110 de la boîte électrique de manière à repousser les volets 115 vers l'extérieur.

Comme le montre également la figure 6, l'étrier 150 comporte un socle 151 à partir duquel s'élèvent deux bras 153 dont les extrémités libres présentent des moyens d'accrochage 154 au panneau de plâtre 400. L'étrier comporte également des éléments de connexion (non visibles sur les figures), qui sont fixés au socle 151 et qui comprennent chacun une borne d'entrée pour la connexion de l'un des fils électriques 331, 351 et une borne de sortie accessible par l'avant du socle 151 pour la connexion du module d'appareillage.

Plus précisément, le socle 151 de l'étrier 150 est prévu pour se placer à l'arrière du fond 112 du corps 110, de manière à former avec celui-ci un double-fond.

Ce socle 151 comporte ici une paroi de fond 151A plane, globalement circulaire autour de l'axe principal A1, qui est bordée à l'avant par un rebord périphérique 151B adapté à venir en appui contre le corps 110.

Les deux bras 153 permettent de positionner l'étrier 150 sur le panneau de plâtre 400, avant de rapporter le corps 110.

Les deux bras 153 s'étendent sur des longueurs telles qu'une fois accrochés au panneau de plâtre 400, ils maintiennent le socle 151 à l'arrière et à distance de ce panneau de plâtre 400.

Ces deux bras 153 s'étendent à partir de la tranche avant du rebord périphérique 151B du socle 151, dans le prolongement de ce rebord périphérique 151B, dans des directions parallèles, en position diamétralement opposée.

Les extrémités libres de ces deux bras 153 sont recourbées vers l'extérieur, de manière à former des rebords 154 qui sont ainsi adaptés à s'appuyer contre la face avant du panneau de plâtre 400.

L'ouverture d'entrée 152, qui permet le passage des fils électriques 331, 351, est située dans le rebord périphérique 151B du socle 151, dans le prolongement de l'un des deux bras 153. Elle présente une forme oblongue, de telle manière que la gorge périphérique 14 prévue dans l'embase de fixation 10 de l'embout 1 puisse s'engager sur le bord de cette ouverture d'entrée 152, de manière à assurer l'étanchéité entre l'embout 1 et l'étrier 150 (voir figure 7).

Comme le montre la figure 6, pour permettre de rapporter l'étrier 150 à l'arrière du corps 110, la paroi latérale 111 du corps 110 présente, en creux dans sa face extérieure, deux rainures 118 dont les dimensions sont ajustées à celles des bras 153, pour permettre le passage de ces derniers. On observe également sur la figure 6 que le trottoir extérieur 113 du corps 110 est interrompu dans le prolongement de ces deux rainures 118, pour permettre le passage des rebords 154 de l'étrier 150.

Comme le montre la figure 6, l'étrier 150 comporte trois éléments de connexion de phase, de neutre et de terre.

Ces trois éléments de connexion sont fixés dans des logements isolés, délimités par des cloisons 156 s'élevant à partir de la face avant de la paroi de fond 151A du socle 151 de l'étrier 150. Ces trois logements sont positionnés les uns par rapport aux autres en T.

Comme cela a été exposé supra, chaque élément de connexion comporte une borne d'entrée pour la connexion de l'un des fils électriques 331, 351 et une borne de sortie accessible par l'avant du socle 151 pour la connexion du module d'appareillage.

Les bornes d'entrée des éléments de connexion sont équipées chacune d'un levier de manœuvre 157 monté mobile en rotation par rapport au socle 151. Ce levier de manœuvre 157 est alors prévu pour bloquer le ou les fils électriques qui sont rapportés dans la borne d'entrée afin d'établir une connexion électrique.

Les bornes de sortie des éléments de connexion sont quant à elles formées par des alvéoles de réception de broches prévues à l'arrière du module d'appareillage. Un capot 158 recouvre ici ces alvéoles de réception. Il présente trois ouvertures d'accès à ces alvéoles.

Comme le montre la figure 6, pour permettre aux broches du module d'appareillage de se connecter à ces alvéoles, le fond 112 du corps 110 de la boîte électrique 100 présente une ouverture d'accès 119 centrale, au travers de laquelle ces broches peuvent s'engager.

Cette ouverture d'accès 119 est initialement fermée par un opercule 120 détachable, qui est surmoulé sur le corps 110 et qui présente en face avant une languette facilitant son arrachement.

En référence à la figure 8, on peut exposer en détail un exemple de mise en place et de connexion de la boîte électrique 100 dans la cloison creuse. Cet exemple sera ici décrit en considérant le cas où l'installateur souhaite repiquer un autre module d'appareillage en parallèle de celui que la boîte électrique 100 va accueillir.

Initialement, une ouverture circulaire 401 est pratiquée à la scie cloche dans le panneau de plâtre 400 de la cloison creuse, de telle manière que les extrémités libres de deux gaines de cheminement 330, 350 puissent être tirées à l'extérieur de la cloison creuse, au travers de cette ouverture circulaire 401.

Les extrémités des fils électriques 331, 351 sortant de ces gaines de cheminement 330, 350 sont alors engagées au travers des deux conduits 30, 50 de l'embout 1 et au travers de l'ouverture d'entrée 152 prévue dans l'étrier 150 (l'embout 1 et l'étrier 150 étant à cette étape soit assemblés, soit disjoints).

Les extrémités des deux gaines de cheminement 330, 350 sont ensuite bloquées dans les tubes des conduits 30, 50 de l'embout 1.

Après avoir soulevé les leviers de manœuvre 157, l'installateur positionne les fils électriques 331, 351 par paire contre les éléments de connexion prévus dans l'étrier 150, puis il rabat les leviers de manœuvre 157 de manière à connecter ces fils électriques 331, 351 aux éléments de connexion.

L'étrier 150 est ensuite mis en place au travers de l'ouverture circulaire 401 pratiqué dans le panneau de plâtre 400, tout d'abord en l'y engageant par son côté duquel émerge l'embout 1, puis en le faisant basculer.

L'étrier 150 est considéré en place lorsque les rebords 154 des bras 153 sont en appui contre la face avant du panneau de plâtre 400.

Reste alors pour l'installateur à engager le corps 110 au travers de l'ouverture circulaire 401 pratiquée dans le panneau de plâtre 400, ce qui est fait sans difficulté grâce aux rainures 118 prévues en creux dans la face externe de sa paroi latérale 111 (qui coulissent le long des bras 153 de l'étrier 150).

La boîte électrique 100 est ainsi parée à accueillir le module d'appareillage.

Comme le montre la figure 5, on peut alors prévoir d'écarter angulairement les deux conduits 30, 50 de l'embout 1 de manière que les deux gaines de cheminement 330, 350 s'écartent de la seconde ouverture circulaire 402 pratiquée dans le panneau de plâtre 400 (voir figure 8). De cette manière, ces gaines de cheminement 330, 350 ne font pas obstacle à l'installation d'une seconde boîte électrique 100 dans cette seconde ouverture circulaire 402.

Sur les figures 9 à 10, on a représenté le second mode de réalisation de la boîte électrique 200.

Comme cela a été exposé précédemment, dans ce mode de réalisation, la boîte électrique 200 comporte un corps 210, mais elle est dépourvue d'étrier et de moyens de connexion des fils électriques 331, 351. Dans ce mode, les moyens de connexion sont embarqués directement sur le mécanisme d'appareillage.

Comme le montre plus particulièrement la figure 9, le corps 210 de la boîte électrique 200 présente ici une forme générale cylindrique, mais il pourrait bien entendu présenter une forme différente, notamment parallélépipédique.

Ce corps 210 comporte une paroi latérale 211 tubulaire de révolution, qui est fermée à l'arrière par une paroi de fond 212 et qui est ouverte vers l'avant. Le corps 210 délimite ainsi un logement intérieur d'accueil du mécanisme d'appareillage.

Pour sa fixation dans l'ouverture circulaire 401 pratiquée dans le panneau de plâtre 400, le corps 210 de la boîte d'encastrement 200 comporte un trottoir extérieur 214 qui longe extérieurement le bord de l'ouverture avant de la paroi latérale 211 et qui est adapté à prendre appui contre la face avant du panneau de plâtre 400, tout autour de l'ouverture circulaire 401. Ainsi, ce trottoir extérieur 214 permet de bloquer le corps 210 de la boîte électrique 200 vers l'arrière.

Pour le bloquer vers l'avant, la boîte électrique 200 comprend deux griffes 230 qui interviennent en position diamétralement opposée sur la face externe de la paroi latérale 211 du corps 210, et qui, sous le contrôle de vis 231 qui débouchent à l'avant du corps 210, peuvent venir s'accrocher à la face arrière du panneau de plâtre 400.

Pour la fixation du support d'appareillage dans lequel est installé le mécanisme d'appareillage, la paroi latérale 211 du corps 210 de la boîte d'encastrement 200 porte intérieurement des puits de vissage 240, dans lesquels peuvent se visser des vis.

Ici, comme le montre la figure 9, l'ouverture d'entrée 213 (qui permet aux fils électriques 331, 351 d'entrer à l'intérieur de la boîte électrique 200) est prévue dans la paroi latérale 211 du corps 210, à proximité de la paroi de fond 212 du corps 210.

Comme le montre la figure 10, le bord de cette ouverture d'entrée 213 présente un contour de forme identique à celui de la gorge périphérique 14 de l'embout 1, ce qui permet de facilement engager l'embase de fixation 10 de l'embout 1 au travers de cette ouverture d'entrée 213.

La présente invention n'est nullement limitée aux modes de réalisation décrits et représentés, mais l'homme du métier saura y apporter toute variante conforme à son esprit.

En particulier, on pourra prévoir que les parties de liaison des deux conduits de l'embout se confondent partiellement.

Selon une autre variante, on pourra prévoir de réaliser l'embase de fixation et/ou les tubes des conduits de l'embout en ABS, tandis que les parties de liaison seront réalisées en SEBS.

En variante, on pourra prévoir de surmouler l'embout sur la boîte électrique. Ainsi, il ne sera plus nécessaire de prévoir que l'embase de l'embout comporte des moyens de fixation à la boîte électrique.

Selon une autre variante de l'invention, on pourra prévoir que l'embout comporte davantage de conduits, pour la connexion de davantage de gaines de cheminement.

Ces différentes gaines pourront alors chacune amener dans des directions différentes des fils électriques assurant des fonctions différentes. On pourra ainsi par exemple prévoir :
- une gaine pour les fils électriques issus du réseau électrique local, qui amènent le courant électrique au module d'appareillage,
- des gaines différentes pour les fils électriques partant vers des points lumineux distants,
- une gaine pour les fils électriques assurant la communication entre deux va-et-vient (on parle de « navette »).

Sur l'exemple représenté sur la figure 11, cet embout 1 comporte trois conduits 30, 50, 70. Il comporte ainsi deux embouts 30, 50 homologues de ceux de l'embout représenté sur la figure 1, et un troisième conduit 70 situé entre les deux autres.

De la même manière que les conduits 30, 50, ce troisième conduit 70 comporte une partie de liaison 71 qui s'étend à partir de l'embase de fixation 10, et une partie d'extrémité libre formée de trois tubes 72, 74, 76 coaxiaux.

Ici, les trois conduits 30, 50, 70 s'étendent en longueur suivant des axes coplanaires. On pourrait en variante prévoir qu'il en soit autrement. Ainsi, ces conduits pourraient être régulièrement répartis autour d'un axe central.

Sur la figure 12, on a représenté une variante de réalisation de l'étrier 150 de la figure 6.

Dans cette variante, l'étrier 150 présente une forme presque identique à celle de l'étrier de la figure 6. Il ne se distingue de celui-ci que par la forme de son ouverture d'entrée 160.

Cette ouverture d'entrée 160 présente ici une forme rectangulaire allongée le long d'une partie du pourtour du rebord périphérique 151B du socle 151. Elle présente un premier bord situé au niveau la paroi de fond 151A du socle 151. Ses trois autres bords sont bordés, du côté extérieur de l'étrier 150, par un rebord 161.

Une rainure 162 est prévue en creux dans la face intérieure de ce rebord 161.

Sur les figures 13 à 16, on a représenté un second mode de réalisation de l'embout 1, dans lequel ce dernier est adapté à être fixé à l'étrier 150, dans l'axe de l'ouverture d'entrée 160.

Dans ce mode de réalisation, l'embout 1 présente trois conduits 30, 50, 70 distincts pour accueillir les extrémités libres de trois gaines de cheminement différentes.

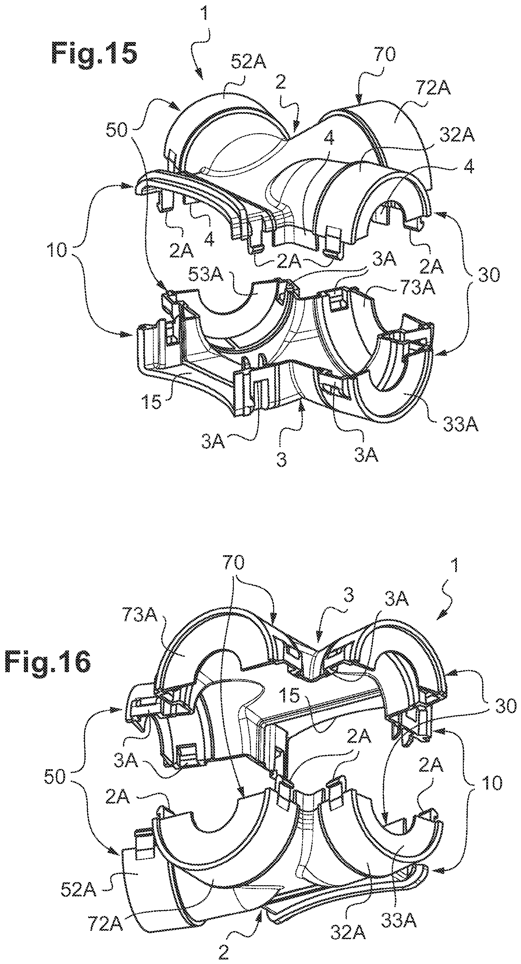

Comme le montrent les figures 15 et 16, cet embout 1 est formé de deux demi-coques 2, 3 presque identiques, équipées de moyens d'encliquetage afin de permettre leur assemblage.

Comme le montrent les figures 13 et 14, cet embout 1 présente une partie flexible, ici réalisée en SEBS, sur laquelle sont surmoulées des parties rigides, ici réalisées en polypropylène.

Ainsi, l'embase de fixation 10 de l'embout 1 comporte, à son extrémité libre, un manchon rigide 11A de section rectangulaire, qui se prolonge vers les conduits 30, 50, 70 par un manchon flexible 12A.

De la même manière, chaque conduit 30, 50, 70 comporte un collier rigide 32A, 52A, 72A de forme annulaire, qui se prolonge vers l'embase de fixation 10 par un tube flexible 31A, 51A, 71A.

Ici, les conduits 30, 50, 70 forment avec l'embase de fixation 10 une croix. Ainsi, l'un des conduits 70 s'étend dans l'axe de l'embase de fixation 10, tandis que les deux autres conduits 30, 50 s'étendent presque à angle droit par rapport à ceux-ci. Ces deux conduits 30, 50 sont ici plus précisément légèrement inclinés vers le premier conduit 70, à environ 80 degrés par rapport à celui-ci.

Les tubes flexibles 31A, 51A, 71A des conduits 30, 50, 70 communiquent alors tous avec le manchon flexible 12A de l'embase de fixation 10.

Comme le montre la figure 13, le manchon rigide 11A de l'embase de fixation 10 est bordé, sur trois des côtés de sa face externe, par une nervure 13A qui est adaptée à coulisser dans la rainure 162 prévue en creux dans le rebord 161 de l'ouverture 160 de l'étrier 150.

Grâce à elle, il est possible de rapporter l'embout 1 par l'arrière de l'étrier 150, en faisant coulisser sa nervure 13A dans la rainure 162.

Pour bloquer l'embout 1 en position sur l'étrier 150 lorsque son embase de fixation 10 est située dans l'axe de l'ouverture d'entrée 160 de l'étrier 150, la nervure 13A porte deux dents d'encliquetage 14A adaptées à se clipser dans deux encoches 163 prévue en creux dans la face intérieure du rebord 161 de l'ouverture 160 de l'étrier 150 (voir figure 12).

Comme le montrent les figures 13 et 14, le conduit 70, qui est situé dans l'axe de l'embout de fixation 10, présente ici un diamètre supérieur à celui des deux autres conduits 50, 30, de sorte qu'il peut recevoir des gaines de cheminement de plus grands diamètres.

De manière à assurer une étanchéité à la jonction entre la gaine de cheminement et le conduit dans lequel elle est introduite, le collier 32A, 52A, 72A de chaque conduit 30, 50, 70 est partiellement obturé par une membrane annulaire souple 33A, 53A, 73A.

Chaque membrane annulaire souple 33A, 53A, 73A forme ici une rondelle plane qui borde intérieurement l'extrémité libre du conduit 30, 50, 70 correspondant et qui est prévue pour se déformer lorsqu'une gaine est enfilée à l'intérieur du conduit 30, 50, 70 correspondant.

Comme le montrent les figures 15 et 16, l'une des demi-coques 2 porte des pattes d'encliquetage 2A adaptées à s'encliqueter sur l'autre demi-coque 3.

Il est ici plus précisément prévu une patte d'encliquetage 2A de part et d'autre de chaque demi-collier 32A, 52A, 72A et de part et d'autre du demi-manchon rigide 11A de la première demi-coque 2. Des arceaux 3A sont prévus en correspondance sur l'autre demi-coque 3, de manière que les pattes d'encliquetage 2A puissent les traverser et s'y clipser.

Puisque les conduits 30, 50, 70 sont ici en partie rigides, ils présentent une raideur suffisante pour assurer une bonne fixation des gaines de cheminement à l'embout 1.

Puisqu'ils sont en partie souples, ils permettent à l'embout 1 de se déformer de manière à faciliter la connexion des gaines de cheminement.

A l'état non déformé, les deux demi-coques 2, 3 de l'embout 1 présentent des bords jointifs, ce qui assure l'étanchéité entre ces deux demi-coques 2, 3.

On comprend que lorsque l'embout 1 se déforme, les bords des parties souples des deux demi-coques 2, 3 risquent de s'écarter l'un de l'autre, en créant des interstices.

C'est la raison pour laquelle, comme le montre bien la figure 15, le bord de la partie souple de la première demi-coque 2 est prolongé par des languettes 4 qui sont prévues pour s'appliquer contre la face interne de la partie souple de l'autre demi-coque 3. Ainsi, lorsque l'installateur déforme l'embout 1, ces languettes 4 ferment les interstices qui se créent entre les bords des parties souples des deux demi-coques 2, 3.

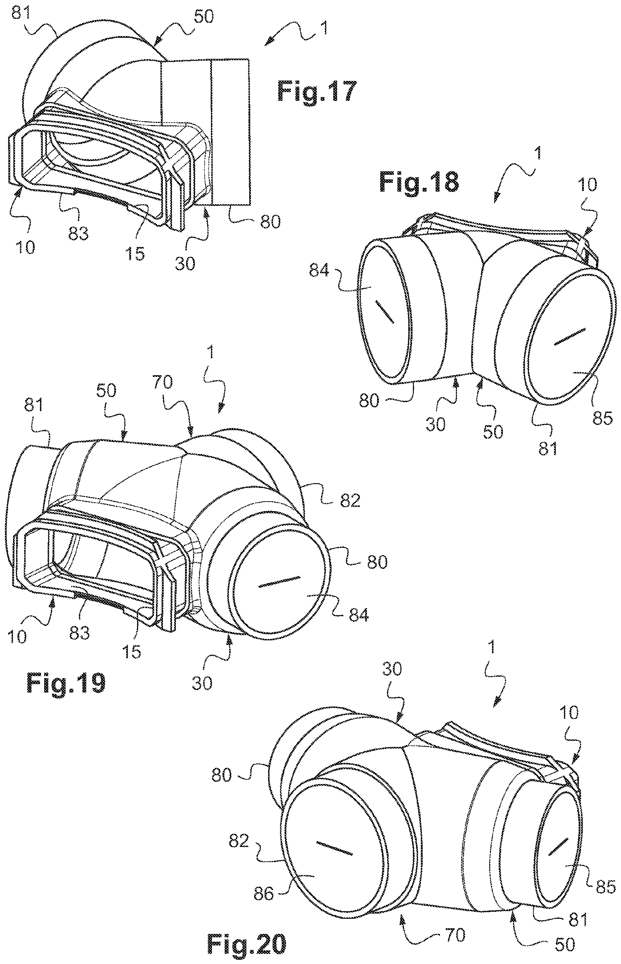

Sur les figures 17 et 18, on a représenté un troisième mode de réalisation de l'embout 1, dans lequel ce dernier est adapté à être fixé à l'étrier 150 de la figure 12, dans l'axe de l'ouverture d'entrée 160.

Dans ce mode de réalisation, l'embout 1 présente deux conduits 30, 50 distincts pour accueillir les extrémités libres de deux gaines de cheminement différentes.

Cet embout 1 est ici formé d'une seule pièce, par un processus de moulage par soufflage d'une matière plastique. En variante, il pourrait être constitué de plusieurs pièces moulées et assemblées.

Cet embout 1 présente une partie flexible, ici réalisée en SEBS, et des parties rigides, ici réalisées en polypropylène.

Ainsi, l'embase de fixation 10 de l'embout 1 comporte, à son extrémité libre, un manchon rigide 83 de section rectangulaire, qui se prolonge vers les conduits 30, 50 par un manchon flexible.

De la même manière, chaque conduit 30, 50 comporte un collier 80, 81 rigide de forme annulaire, qui se prolonge vers l'embase de fixation 10 par un tube flexible.

Les tubes flexibles des conduits 30, 50 communiquent alors tous avec le manchon flexible de l'embase de fixation 10.

Ici, les conduits 30, 50 s'étendent selon des axes inclinés à 120 degrés par rapport à l'axe de l'embase de fixation 10.

Comme le montre la figure 17, le manchon rigide 83 de l'embase de fixation 10 présente une forme sensiblement identique à celui représenté sur la figure 13.

Comme le montrent les figures 17 et 18, les conduits 30, 50 présentent des diamètres identiques et constants.

De manière à assurer une étanchéité à la jonction entre la gaine de cheminement et le conduit dans lequel elle est introduite, le collier 80, 81 de chaque conduit 30, 50 est complètement obturé, à son extrémité libre, par une membrane annulaire souple 84, 85.

Chaque membrane annulaire souple 84, 85 est prévue pour être percée puis pour se déformer lorsqu'une gaine est enfilée à l'intérieur du conduit 30, 50 correspondant.

Puisque les conduits 30, 50 sont ici en partie rigides, ils présentent une raideur suffisante pour assurer une bonne fixation des gaines de cheminement à l'embout 1.

Puisqu'ils sont en partie souples, ils permettent à l'embout 1 de se déformer de manière à faciliter la connexion des gaines de cheminement.

Sur les figures 19 et 20, on a représenté un quatrième mode de réalisation de l'embout 1.

Dans ce mode de réalisation, l'embout 1 présente une forme homologue de celui représenté sur les figures 17 et 18.

Il s'en distingue principalement par la caractéristique selon laquelle il comporte non pas deux mais trois conduits 30, 50, 70 distincts pour accueillir les extrémités libres de trois gaines de cheminement différentes.

Ici, chaque conduit 30, 50, 70 comporte un collier 80, 81, 82 rigide de forme annulaire, qui se prolonge vers l'embase de fixation 10 par un tube flexible.

Les conduits 30, 50, 70 et l'embase de fixation 10 forment ensemble une croix. Ils s'étendent ainsi selon des axes coplanaires. Les deux conduits 30, 50 sont orientés dans des directions presque opposées. Ils sont toutefois légèrement inclinés vers l'embase de fixation 10. Le troisième conduit 70 est quant à lui orienté à l'opposé de l'embase de fixation 10.

Ce troisième conduit 70 présente ici un diamètre supérieur à celui des deux autres conduits 30, 50, de manière à pouvoir accueillir l'extrémité d'une gaine de cheminement de diamètre supérieur.

De manière à assurer une étanchéité à la jonction entre la gaine de cheminement et le conduit dans lequel elle est introduite, le collier 80, 81, 82 de chaque conduit 30, 50, 70 est obturé, à son extrémité libre, par une membrane annulaire souple 84, 85, 86.

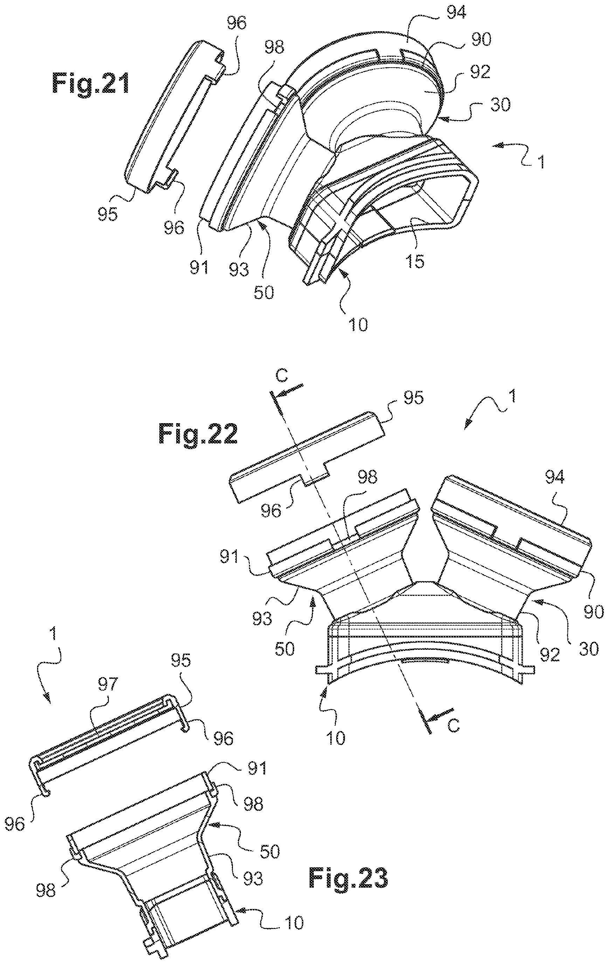

Sur les figures 21 à 23, on a représenté un cinquième mode de réalisation de l'embout 1, dans lequel ce dernier est adapté à être fixé à l'étrier 150 de la figure 12, dans l'axe de l'ouverture d'entrée 160.

Dans ce mode de réalisation, l'embout 1 présente deux conduits 30, 50 distincts pour accueillir les extrémités libres de deux gaines de cheminement différentes.

Cet embout 1 est ici formé de plusieurs éléments réalisés par un processus de moulage par injection. Cet embout 1 présente une partie flexible, ici réalisée en SEBS, et des parties rigides, ici réalisées en polypropylène.

L'embase de fixation 10 est identique à celle représentée sur les figures 17 et 18. Les conduits 30, 50 sont en revanche différents.

Ici, les conduits 30, 50 s'étendent selon des axes inclinés à 120 degrés par rapport à l'axe de l'embase de fixation 10.

Chaque conduit 30, 50 comporte un tube flexible 92, 93 qui s'étend à partir de l'embase de fixation 10 et qui s'évase à son extrémité opposée, ainsi qu'un collier 90, 91 rigide de forme annulaire, surmoulé sur l'extrémité libre évasée du tube flexible 92, 93. Ce collier 90, 91 est ici bordé par une nervure périphérique.

De manière à assurer une étanchéité à la jonction entre la gaine de cheminement et le conduit dans lequel elle est introduite, le collier 90, 91 de chaque conduit 30, 50 est équipé d'un capuchon 94, 95.

Chaque capuchon 94, 95 présente une paroi latérale cylindrique adaptée à s'emboîter sur le collier 90, 91 du conduit 30, 50 correspondant.

Cette paroi latérale est obturée, d'un côté, par une membrane annulaire souple 97 (figure 23) prévue pour être percée puis pour se déformer lorsqu'une gaine est enfilée à l'intérieur du conduit 30, 50 correspondant.

Pour la fixation du capuchon 94, 95 au collier 90, 91 correspondant, il est prévu deux pattes d'encliquetage 96 qui s'étendent à partir de la paroi latérale du capuchon 94, 95, à l'opposé de la membrane annulaire souple 97, et qui sont adaptées à s'encliqueter dans deux cavités 98 prévues en creux dans la face externe du collier 90, 91 du conduit 30, 50 correspondant, au niveau de sa nervure périphérique.

Préférentiellement, l'encliquetage du capuchon sur le collier correspondant est démontablel.

Ainsi est-il possible de remplacer un capuchon 94, 95 lorsqu'il ne convient pas. Il peut en effet arriver que la gaine à enfiler dans le conduit 30, 50 correspondant présente un diamètre très inférieur à celui de la membrane annulaire souple 97 du capuchon 94, 95. Le risque serait alors que la membrane annulaire souple 97 ne permette pas de maintenir la gaine dans le conduit 30, 50.

Grâce aux moyens d'encliquetage utilisés, il est alors possible de remplacer le capuchon 94, 95 par un autre capuchon (non représenté) de forme différente, dont la membrane annulaire souple présente un diamètre moindre (cette membrane étant alors bordée sur sa périphérie par un anneau en matière plus rigide). De cette façon, la gaine qui sera enfilée au travers de cette membrane annulaire souple pourra être maintenue plus efficacement dans le conduit 30, 50.

En variante, on aurait pu prévoir de fixer les capuchons aux colliers de manière différente, par exemple par soudure.

Encore en variante, on aurait pu prévoir que l'embout soit ici réalisé en deux demi-coques assemblées par encliquetage ou par tout autre procédé.

## Revendications

1. Connecteur (150) pour boîte électrique (100) à encastrer dans une paroi (400), qui est adapté à connecter au moins deux conducteurs électriques (331, 351) à un appareillage électrique logé dans un corps (110) de la boîte électrique (100), le connecteur (150) comportant :
- un socle (151) qui délimite une ouverture d'entrée (152) pour lesdits conducteurs électriques (331, 351) et à partir duquel s'élèvent au moins deux bras (153) dont les extrémités libres présentent des moyens d'accrochage (154) à la paroi (400), et
- au moins deux éléments de connexion fixés au socle (151), qui comprennent chacun une borne d'entrée pour la connexion de l'un desdits conducteurs électriques (331, 351) et une borne de sortie accessible par l'avant du socle (151) pour la connexion dudit appareillage électrique,
**caractérisé en ce qu'**il comporte en outre un embout (1) d'entrée de conducteurs électriques (331, 351) dans la boîte électrique (100; 200), comportant :
- une embase de fixation (10) fixée au bord de l'ouverture d'entrée (152) du socle (151), qui délimite une ouverture de passage (15) de conducteurs électriques, et
- un premier conduit (30) qui s'étend à partir de l'embase de fixation (10) et qui comprend des moyens de connexion (33, 35, 37 ; 33A) à une gaine de cheminement (330) de conducteurs électriques, et
- au moins un second conduit (50) qui s'étend à partir de l'embase de fixation (10), qui comprend des moyens de connexion (53, 55, 57 ; 53A) à une autre gaine de cheminement (350) de conducteurs électriques, et qui est au moins en partie flexible de sorte qu'il comporte une partie d'extrémité libre (52, 54, 56 ; 52A) qui présente une orientation ajustable par rapport à ladite embase de fixation (10).

2. Connecteur (150) selon la revendication précédente, dans lequel le premier conduit (30) comporte une partie d'extrémité libre (32, 34, 36 ; 32A) qui présente une orientation ajustable par rapport à ladite embase de fixation (10).

3. Connecteur (150) selon l'une des revendications précédentes, dans lequel l'orientation de la partie d'extrémité libre (52, 54, 56 ; 52A) dudit second conduit (50) est ajustable indépendamment dudit premier conduit (30).

4. Connecteur (150) selon l'une des revendications précédentes, dans lequel il est prévu un troisième conduit (70) qui s'étend à partir de l'embase de fixation (10), qui comprend des moyens de connexion (73A) à une autre gaine de cheminement de conducteurs électriques, et dont une partie d'extrémité libre (72, 74, 76 ; 72A) présente une orientation ajustable par rapport à ladite embase de fixation (10).

5. Connecteur (150) selon l'une des revendications précédentes, dans lequel l'orientation de la partie d'extrémité libre (52, 54, 56 ; 52A) dudit second conduit (50) est ajustable manuellement.

6. Connecteur (150) selon l'une des revendications 1 à 5, dans lequel chaque conduit (30, 50, 70) comporte une partie flexible (31A, 51A, 71A) tubulaire prolongée à son extrémité libre par un collier rigide (32A, 52A, 72A).

7. Connecteur (150) selon la revendication précédente, dans lequel chaque collier rigide (32A, 52A, 72A) est partiellement obturé par une membrane annulaire souple (33A, 53A, 73A).

8. Connecteur (150) selon l'une des revendications précédentes, formé de deux demi-coques (2, 3) encliquetées l'une sur l'autre, qui comportent chacune la moitié de chaque conduit (30, 50, 70).

9. Connecteur (150) selon l'une des revendications 1 à 5, dans lequel l'embase de fixation (10) et les conduits (30, 50, 70) sont formés d'une seule pièce par moulage d'une matière souple.

10. Connecteur (150) selon l'une des revendications précédentes, dans lequel à l'état non déformé, les conduits (30, 50, 70) s'étendent en longueur selon des axes (A30, A50) inclinés l'un par rapport à l'autre.

11. Connecteur (150) selon l'une des revendications précédentes, dans lequel à l'état non déformé, les conduits (30, 50, 70) s'étendent en longueur selon des axes (A30, A50) compris dans un plan orthogonal au plan moyen de l'ouverture de passage (15).

12. Connecteur (150) selon l'une des revendications précédentes, dans lequel la partie d'extrémité libre de l'un au moins des conduits (30, 50, 70) présente au moins deux tubes cylindriques de révolution (32, 34, 36, 52, 54, 56, 72, 74, 76) coaxiaux et de diamètres différents, chacun équipé de moyens de connexion (33, 35, 37, 53, 55, 57) à des gaines de cheminement (330) de diamètres différents.

13. Connecteur (150) selon l'une des revendications 1 à 12, dans lequel l'embase de fixation (10) comporte des moyens de fixation (12, 13 ; 12A, 13A) audit composant (150 ; 210) de la boîte électrique (100 ; 200).

14. Connecteur (150) selon la revendication précédente, dans lequel les moyens de fixation (12, 13 ; 12A, 13A) comportent des moyens d'encliquetage ou de coopération de forme.

15. Connecteur (150) selon la revendication précédente, dans lequel les moyens de fixation comportent des moyens de glissière (12A) permettant de ramener l'embase de fixation (10) dans l'axe d'une ouverture (160) prévue dans ledit composant (150) de la boîte électrique (100), et des dents d'encliquetage permettant de bloquer dans cette position l'embase de fixation (10) par rapport au composant (150).

16. Connecteur (150) selon l'une des revendications 1 à 12, dans lequel l'embase de fixation est surmoulée sur ledit composant de ladite boîte électrique.

17. Boîte électrique (100) comportant un corps (110) qui présente une paroi latérale (111) fermée à l'arrière par une paroi de fond (112), et un connecteur (150) selon l'une des revendications précédentes, dont le socle (151) est situé à l'arrière de la paroi de fond (112) et dont les bras (153) sont engagés de part et d'autre de la paroi latérale (111) du corps (110).

## Patentansprüche

1. Verbinder (150) für einen in eine Wand (400) einzusetzenden elektrischen Schaltkasten (100), der dazu ausgelegt ist, wenigstens zwei elektrische Leiter (331, 351) mit einem in einem Körper (110) des elektrischen Schaltkastens (100) untergebrachten elektrischen Gerät zu verbinden, wobei der Verbinder (150)
- einen Sockel (151), der eine Eingangsöffnung (152) für die elektrischen Leiter (331, 351) begrenzt und von dem aus sich wenigstens zwei Arme (153) erheben, deren freie Enden Mittel (154) zum Festhaken an der Wand (400) aufweisen, und
- wenigstens zwei am Sockel (151) befestigte Verbindungselemente, von denen jedes eine Eingangsklemme zum Verbinden des einen der elektrischen Leiter (331, 351) und eine von der Vorderseite des Sockels (151) her zugängliche Ausgangsklemme zum Verbinden des elektrischen Geräts aufweist,
aufweist,
**dadurch gekennzeichnet, daß** er außerdem einen Stutzen (1) für den Eintritt elektrischer Leiter (331, 351) in den elektrischen Schaltkasten (100; 200) aufweist, der
- einen am Rand der Eingangsöffnung (152) des Sockels (151) befestigten Befestigungssockel (10), der eine Durchgangsöffnung (15) für elektrische Leiter begrenzt, und
- einen ersten Kanal (30), der sich von dem Befestigungssockel (10) aus erstreckt und der Mittel (33, 35, 37; 33A) für eine Verbindung mit einer Führungshülle (330) für elektrische Leiter aufweist, und
- wenigstens einen zweiten Kanal (50), der sich von dem Befestigungssockel (10) aus erstreckt, der Mittel (53, 55, 57; 53A) zum Verbinden mit einer anderen Führungshülle (350) für elektrische Leiter aufweist und der wenigstens teilweise flexibel ist, so daß er ein freies Endteil (52, 54, 56; 52A) aufweist, das eine in Bezug auf den Befestigungssockel (10) einstellbare Orientierung aufweist,
aufweist.

2. Verbinder (150) gemäß dem vorangehenden Anspruch, bei dem der erste Kanal (30) ein freies Endteil (32, 34, 36; 32A) aufweist, das eine in Bezug auf den Befestigungssockel (10) einstellbare Orientierung aufweist.

3. Verbinder (150) gemäß einem der vorangehenden Ansprüche, bei dem die Orientierung des freien Endteils (52, 54, 56; 52A) des zweiten Kanals (50) unabhängig vom ersten Kanal (30) einstellbar ist.

4. Verbinder (150) gemäß einem der vorangehenden Ansprüche, bei dem ein dritter Kanal (70) vorgesehen ist, der sich vom Befestigungssockel (10) aus erstreckt, der Mittel (73A) zum Befestigen an einer anderen Führungshülle für elektrische Leiter aufweist und von dem ein freies Endteil (72, 74, 76; 72A) eine in Bezug auf den Befestigungssockel (10) einstellbare Orientierung aufweist.

5. Verbinder (150) gemäß einem der vorangehenden Ansprüche, bei dem die Orientierung des freien Endteils (52, 54, 56; 52A) des zweiten Kanals (50) von Hand einstellbar ist.

6. Verbinder (150) gemäß einem der Ansprüche 1 bis 5, bei dem jeder Kanal (30, 50, 70) einen rohrförmigen flexiblen Teil (31A, 51A, 71A) aufweist, der an seinem freien Ende durch einen steifen Kragen (32A, 52A, 72A) verlängert ist.

7. Verbinder (150) gemäß dem vorangehenden Anspruch, bei dem jeder steife Kragen (32A, 52A, 72A) teilweise durch eine flexible ringförmige Membrane (33A, 53A, 73A) verschlossen ist.

8. Verbinder (150) gemäß einem der vorangehenden Ansprüche, der aus zwei miteinander verrasteten Halbschalen (2, 3) gebildet ist, die jeweils die Hälfte jedes Kanals (30, 50, 70) aufweisen.

9. Verbinder (150) gemäß einem der Ansprüche 1 bis 5, bei dem der Befestigungssockel (10) und die Kanäle (30, 50, 70) einstückig durch Gießen eines flexiblen Materials gefertigt sind.

10. Verbinder (150) gemäß einem der vorangehenden Ansprüche, bei dem sich die Kanäle (30, 50, 70) im nicht verformten Zustand in der Länge entlang zueinander geneigter Achsen (A30, A50) erstrecken.

11. Verbinder (150) gemäß einem der vorangehenden Ansprüche, bei dem sich die Kanäle (30, 50, 70) im nicht verformten Zustand in der Länge entlang zueinander geneigter Achsen (A30, A50) erstrecken, die in einer zur Mittelebene der Durchgangsöffnung (15) rechtwinkligen Ebene liegen.

12. Verbinder (150) gemäß einem der vorangehenden Ansprüche, bei dem der freie Endteil wenigstens eines der Kanäle (30, 50, 70) wenigstens zwei koaxiale kreiszylinderförmige Rohre (32, 34, 36, 52, 54, 56, 72, 74, 76) mit unterschiedlichen Durchmessern aufweist, wobei jedes mit Mitteln (33, 35, 37, 53, 55, 57) zum Verbinden mit Führungshüllen (330) mit unterschiedlichen Durchmessern versehen ist.

13. Verbinder (150) gemäß einem der Ansprüche 1 bis 12, bei dem der Befestigungssockel (10) Mittel (12, 13; 12A, 13A) zum Befestigen am Bauteil (150; 210) des elektrischen Schaltkastens (100; 200) aufweist.

14. Verbinder (150) gemäß dem vorangehenden Anspruch, bei dem die Befestigungsmittel (12, 13; 12A, 13A) Einrast- oder Formschlußmittel aufweisen.

15. Verbinder (150) gemäß dem vorangehenden Anspruch, bei dem die Befestigungsmittel Gleitschienenmittel (12A), die ermöglichen, den Befestigungssockel (10) auf die Achse einer im Bauteil (150) des elektrischen Schaltkastens (100) vorgesehenen Öffnung (160) auszurichten, und Einrastzähne, die ermöglichen, den Befestigungssockel (10) gegenüber dem Bauteil (150) in dieser Stellung zu blockieren, aufweisen.

16. Verbinder (150) gemäß einem der Ansprüche 1 bis 12, bei dem der Befestigungssockel auf das Bauteil des elektrischen Schaltkastens aufgeformt ist.

17. Elektrischer Schaltkasten (100) mit einem Körper (110), der eine durch eine Rückwand (112) hinten geschlossene Seitenwand (111) aufweist, und einem Verbinder (150) gemäß einem der vorangehenden Ansprüche, dessen Sockel (151) auf der Rückseite der Rückwand (112) angeordnet ist und dessen Arme (153) beiderseits der Seitenwand (111) des Körpers (110) angreifen.

## Claims

1. A connector (150) for an electrical box (100) for flush mounting in a wall (400), which connector is adapted to connect at least two electrical conductors (331, 351) to an electrical accessory that is housed in a body (110) of the electrical box (100), the connector (150) comprising:
• a base (151) that defines an inlet opening (152) for said electrical conductors (331, 351), and from which there extends at least two arms (153) having free ends that present catch means (154) for catching on the wall (400); and
• at least two connection elements that are fastened to the base (151), each of which includes an inlet terminal for connecting one of said electrical conductors (331, 351) and an outlet terminal that is accessible via the front of the base (151) for connecting said electrical accessory;
the connector being **characterized in that** it further comprises an endpiece (1) for admitting electrical conductors (331, 351) into the electrical box (100; 200), the endpiece comprising:
• a fastener base (10) that is fastened to the edge of the inlet opening (152) of the base (151) and that defines a through opening (15) for passing electrical conductors; and
• a first duct (30) that extends from the fastener base (10) and that includes connection means (33, 35, 37; 33A) for connecting to a routing conduit (330) for routing electrical conductors; and
• at least a second duct (50) that extends from the fastener base (10), that includes connection means (53, 55, 57; 53A) for connecting to another routing conduit (350) for routing electrical conductors, and that is flexible, at least in part, so that it includes a free end portion (52, 54, 56; 52A) that presents an orientation that is adjustable relative to said fastener base (10).

2. A connector (150) according to the preceding claim, wherein the first duct (30) includes a free end portion (32, 34, 36; 32A) that presents an orientation that is adjustable relative to said fastener base (10).

3. A connector (150) according to any preceding claim, wherein the orientation of the free end portion (52, 54, 56; 52A) of said second duct (50) is adjustable independently of said first duct (30).

4. A connector (150) according to any preceding claim, wherein a third duct (70) is provided that extends from the fastener base (10), that includes connection means (73A) for connecting to another routing conduit for routing electrical conductors, and that has a free end portion (72, 74, 76; 72A) that presents an orientation that is adjustable relative to said fastener base (10).

5. A connector (150) according to any preceding claim, wherein the orientation of the free end portion (52, 54, 56; 52A) of said second duct (50) is adjustable manually.

6. A connector (150) according to any one of claims 1 to 5, wherein each duct (30, 50, 70) comprises a tubular flexible portion (31A, 51A, 71A) that is extended at its free end by a rigid collar (32A, 52A, 72A).

7. A connector (150) according to the preceding claim, wherein each rigid collar (32A, 52A, 72A) is closed in part by a flexible annular membrane (33A, 53A, 73A).

8. A connector (150) according to any preceding claim, made up of two half-shells (2, 3) that are snap-fastened together, each of which includes half of each duct (30, 50, 70).

9. A connector (150) according to any one of claims 1 to 5, wherein the fastener base (10) and the ducts (30, 50, 70) are formed as a single part by molding a flexible plastics material.

10. A connector (150) according to any preceding claim, wherein, in their non-deformed state, the ducts (30, 50, 70) extend lengthwise along axes (A30, A50) that slope relative to each other.

11. A connector (150) according to any preceding claim, wherein, in their non-deformed state, the ducts (30, 50, 70) extend lengthwise along axes (A30, A50) that lie in a plane that is orthogonal to the mean plane of the through opening (15).

12. A connector (150) according to any preceding claim, wherein the free end portion of at least one of the ducts (30, 50, 70) presents at least two circularly-cylindrical tubes (32, 34, 36, 52, 54, 56, 72, 74, 76) that are coaxial and of different diameters, each fitted with connection means (33, 35, 37, 53, 55, 57) for connecting to routing conduits (330) of different diameters.

13. A connector (150) according to any one of claims 1 to 12, wherein the fastener base (10) includes fastener means (12, 13; 12A, 13A) for fastening to said component (150; 210) of the electrical box (100; 200).

14. A connector (150) according to the preceding claim, wherein the fastener means (12, 13; 12A, 13A) comprise snap-fastener means or interlocking shape means.

15. A connector (150) according to the preceding claim, wherein the fastener means include slideway means (12A) that make it possible to bring the fastener base (10) onto the axis of an opening (160) that is provided in said component (150) of the electrical box (100), and snap-fastener teeth that make it possible to block the fastener base (10) in this position relative to the component (150).

16. A connector (150) according to any one of claims 1 to 12, wherein the fastener base is overmolded on said component of said electrical box.

17. An electrical box (100) comprising: a body (110) that presents a side wall (111) that is closed at the rear by a rear wall (112); and a connector (150) according to any preceding claim, having a base (151) that is situated behind the rear wall (112) and having arms (153) that are engaged on either side of the side wall (111) of the body (110).
